# EUROPÄISCHE PATENTSCHRIFT

(11) **EP 3 132 331 B1**
(45) Veröffentlichungstag und Bekanntmachung des Hinweises auf die Patenterteilung: **21.12.2022**
(21) Anmeldenummer: 15736175.9
(22) Anmeldetag: 17.04.2015
(51) Int. Cl.: B25J 13/02, B25J 9/16, G06F 3/01, G06F 3/0346, G06F 3/03

(54) **HAPTISCHES SYSTEM UND VERFAHREN ZUM BETREIBEN**
HAPTIC SYSTEM AND OPERATING METHOD
SYSTÈME HAPTIQUE ET PROCÉDÉ POUR LE FAIRE FONCTIONNER

(30) Priorität: 17.04.2014 DE 102014105538
(43) Veröffentlichungstag der Anmeldung: 22.02.2017
(73) Patentinhaber: Technische Universität Berlin, 10623 Berlin (DE)
(72) Erfinder: VORSATZ, Thomas, 15366 Neuenhagen (DE); BECKMANN-DOBREV, Boris, 10409 Berlin (DE)
(74) Vertreter: Bittner, Thomas L.
(86) Internationale Anmeldenummer: PCT/DE2015/100163
(87) Internationale Veröffentlichungsnummer: WO 2015/158336

(56) Entgegenhaltungen:
- CN-A- 101 439 514
- US-A- 5 952 796
- US-A- 6 046 563
- US-A1- 2006 106 369
- Podobnik J ET AL: "Proc HARMiS - Hand and arm rehabilitation system", , 8 September 2008 (2008-09-08), pages 237-244, XP055851711, Retrieved from the Internet: URL:http://playpen.icomtek.csir.co.za/~acd c/assistive%20devices/Artabilitation2008/a rchive/2008/papers/ICDVRAT2008_S06_N03_Pod obnik_Munih.pdf [retrieved on 2021-10-15]

## Beschreibung

Die Erfindung betrifft ein haptisches System und ein Verfahren zum Betreiben eines haptischen Systems.

### Hintergrund

Die fortschreitenden Möglichkeiten zur Darstellung gemischter, virtueller oder auch nur angereicherter Realität sowie die zunehmende Geschwindigkeit in der Produktentwicklung mit zusätzlich steigender Komplexität und wachsender Integration weiterer Domänen im Bereich der Mechatronik erfordern zur möglichst früh in der Prozesskette der (virtuellen) Produktentstehung angesiedelten Evaluation der bisherigen Entwicklung und des Bedarfes Absicherungsmöglichkeiten, die durch Interaktionsgeräte erweitert werden, welche neben der Eingabe auch haptische Ausgaben an den Benutzer erlauben, um die Erlebnisqualität näher an diejenige realer Situationen heranzuführen. Neben etablierten Geräten werden ständig neue entwickelt, die entweder sehr kostengünstig oder über einen gegenüber den bisher verfügbaren erhöhten Interaktionsraum und / oder höhere Interaktionskräfte verfügen.

Neben haptischen Systemen, bei denen ein Endeffektoranschluss durch die Nutzerhandkraft geführt und beschleunigt wird, verlangen komplexe Szenarien der virtuellen Produktentstehung auch Gerätelösungen für haptische Systeme, die mechanische Vorgänge selbstständig abbilden können. Eine solche haptische Geräteart soll beispielsweise in der Lage sein, basierend auf einem mechatronischen Modell durch mechanische Bewegung des Endeffektors das Öffnen und Schließen einer automatischen Autotür nachzuahmen, aber gleichzeitig dem Benutzer die Möglichkeit zum direkten Eingreifen geben, also beispielsweise zum Stoppen oder anderweitigen Beeinflussen des Öffnungsvorganges durch Kraftausübung auf den Endeffektor.

Ziel der Anwendung haptischer Geräte ist es, dem Benutzer die Interaktion mit der Maschine oder dem Computer zu ermöglichen, indem seine Wahrnehmung getäuscht wird. Das haptische Gerät erzeugt Reize als Ausgabe und erfährt zum Beispiel Kräfte oder Verlagerungen als Eingabe.

Die Mensch-System-Interaktion, die im Folgenden als Bündelung der ohnehin heute nur noch schwer zu trennenden Begriffe Mensch-Maschine- und Mensch-Computer-Interaktion dienen soll, beschreibt die Wechselwirkung des technischen Systems und des Menschen in interaktiven Anwendungen. Für das Entwickeln von Maschinen, die vom Menschen bedient werden sollen - darunter fallen auch die im nächsten Abschnitt behandelten haptischen Geräte -, sind viele Gestaltungsgrundsätze und Verordnungen zu beachten. Zusammengefasst steht die bestmögliche Ergonomie, also das bestmögliche Erfüllen ergonomischer Anforderungen, an erster Stelle der Gestaltungsziele.

Die Haptik oder auch haptische Wahrnehmung bedient den menschlichen Apparat der Sinne. Eines der häufig verwendeten haptischen Geräte ist heutzutage das Mobiltelefon, das durch Ganzkörpervibration einen Anruf signalisiert oder Eingaben auf dem Touchdisplay bestätigt. Der Begriff Haptik wird als übergeordneter Begriff der vier Arten des Fühlens verwendet, die im Einzelnen der Tastsinn, die Wärmewahrnehmung, der Gleichgewichtssinn und die Kinästhese auf den Muskeln, Gelenken und Sehnen beruhende Empfindungsfähigkeit und motorische Aktivität sind. Erster, auch taktile Wahrnehmung genannt, und letzterer sollen für die weiteren Betrachtungen im Fokus stehen. Diese beiden Wahrnehmungsarten sollen primär durch haptische Geräte bedient werden. Oft werden die Wärmewahrnehmung der taktilen und der Gleichgewichtssinn der kinästhetischen Wahrnehmung zugeordnet. Zwar sind sowohl Wärmequellen an haptischen Geräten als auch Vorrichtungen wie zum Beispiel bewegliche Plattformen oder Sitze für den Benutzer, die den Gleichgewichtssinn ansprechen, denkbar, doch bedienen die meisten auf dem Markt befindlichen Geräte primär die ersten beiden.

Disziplinen der Forschung zur Haptik umfassen die Service orientierte Forschung (haptische Messtechnik), die Grundlagenforschung (haptische Wahrnehmung) und die angewandte Forschung (haptische Synthese). Die haptische Messtechnik beschäftigt sich mit der Standardisierung und Normung, der Kraftmessung, der Schwingungsmessung sowie der Bewegungs-, Geschwindigkeits- und Beschleunigungsmesstechnik. Die haptische Wahrnehmung kann in die Psychophysik und die Neurobiologie unterteilt werden. Die Psychophysik umfasst die Wahrnehmung von maximalen und minimalen Kräften, absoluten Schwellwerten, Auflösung und Abhängigkeiten sowie Dynamik Weiterhin umfasst die Psychophysik die Interaktion, beispielsweise Strategien und spontane Reaktionen. Die Neurobiologie bezieht sich auf Rebeispielsweise Strategien und spontane Reaktionen. Die Neurobiologie bezieht sich auf Rezeptoren in Typ und Dichte, Zusammenhänge zwischen Rezeptoren und kombinierte Wahrnehmung, Nerven-Übertragung, Ort der Informationsverarbeitung, Vorgänge in der Informationsverarbeitung sowie Reaktionen. Die haptische Synthese wird in Virtual Reality und Telemanipulation unterteilt. Virtual Reality umfasst Hardware Interfaces, wie taktile Schnittstellen, kinästhetisches Schnittstellen, Informationsverarbeitung, Aktoren und Kinematikentwürfe; Software Simulation zur Algorithmik, Grafik, Haptik und Augmented Reality sowie Regelungstechnik für zeitdiskrete Systeme. Die Telemanipulation umfasst ebenfalls Hardware Interfaces, wie taktile Schnittstellen, kinästhetisches Schnittstellen, Aktoren und Kinematikentwürfe. Des Weiteren umfasst die Telemanipulation Hardware Schnittstellen, beispielsweise zur Kraftmessung, Regelungstechnik für rückgekoppelte Systeme, Telepräsenz, Kommunikation und Totzeiten. Zwischen den Disziplinen der Forschung zur Haptik und ihren Feldern gibt es vielfältige Wechselwirkungen.

Das Dokument DE 10 2005 003 513 A1 offenbart eine mobile haptische Schnittstelle, insbesondere für weiträumige Telepräsenz. Die Schnittstelle weist zumindest einen Manipulator auf mit einem Endeffektor zur Übergabe der haptischen Informationen zwischen Benutzer und Manipulator. Am anderen Ende des Manipulators ist ein Bezugspunkt ortsfest in der Benutzerumgebung angeordnet. Der Manipulator besteht aus einer mehrachsigen Handhabungsvorrichtung, die geeignet ist, die weiträumige Entfernung zwischen dem Benutzer und dem ortsfesten Punkt zu überbrücken.

Im Dokument US 6,046,563 ist ein haptisches Gerät offenbart, bei dem zwei orthogonal ausgerichtete Linearführungen an ihren Enden verschiebbar mit einem Grundkörper verbunden sind. Die Linearführungen werden in orthogonal angeordneten Bohrungen eines Verfahrbauteils aufgenommen, so dass das Verfahrbauteil in allen Richtungen horizontal beweglich ist. Das Verfahrbauteil weist zwei weitere parallele Bohrungen auf, in denen ein Paar paralleler, vertikal ausgerichteter Linearführungen angeordnet ist. Die Enden dieser Linearführungen sind mittels oberer und unterer Plattformen, die jeweils eine Kabelführung aufweisen, verbunden. Die Plattformen werden über ein Seilzugsystem mittels eines Motors vertikal bewegt. Auch die horizontalen Linearführungen können über Seilzüge mittels Motoren bewegt werden, um das Verfahrbauteil horizontal anzutreiben.

### Zusammenfassung

Aufgabe der Erfindung ist es, ein haptisches System sowie ein Verfahren zum Betreiben eines haptischen Systems anzugeben, bei denen für die haptische Interaktion mit dem Nutzer ein großer Arbeitsraum mit hoher Dynamik bereitgestellt ist. Es soll die Bereitstellung hoher Kräfte und einer hohen Ortsauflösung ermöglicht sein.

Diese Aufgabe wird gelöst durch ein haptisches System nach dem unabhängigen Anspruch 1 sowie ein Verfahren zum Betreiben eines haptischen Systems nach dem unabhängige Anspruch 13. Vorteilhafte Ausgestaltungen sind Gegenstand von abhängigen Unteransprüchen.

Nach einem Aspekt ist ein haptisches System mit einem haptischen Gerät geschaffen, welches einen Endeffektoranschluss und eine Getriebestruktur aufweist. Mit Hilfe der Getriebestruktur ist als Ausgangsgröße eine translatorische Bewegung erzeugbar, die bei dem haptischen Gerät über einen Ausleger in horizontaler Richtung aus der Getriebestruktur herausgeführt und auf den an den Ausleger gekoppelten Endeffektoranschluss gegeben ist. Hierdurch ist der Endeffektoranschluss für einen Nutzer wahrnehmbar bewegbar, beispielsweise translatorisch. Die Getriebestruktur weist angetriebene Linearachsen auf.

Nach einem weiteren Aspekt ist ein Verfahren zum Betreiben eines haptischen Systems mit einem haptischen Gerät geschaffen. Das haptische Gerät weist einen Endeffektoranschluss und eine Getriebestruktur auf. Bei dem Verfahren wird als Ausgangsgröße mittels der Getriebestruktur eine translatorische Bewegung erzeugt. Der Ausgangsgröße entsprechend wird der Endeffektoranschluss translatorisch bewegt, indem die translatorische Bewegung von der Getriebestruktur über einen Ausleger in horizontaler Richtung aus der Getriebestruktur herausgeführt und auf den Endeffektoranschluss gegeben wird. Beim Erzeugen der translatorischen Bewegung in der Getriebestruktur werden angetriebene Linearachsen verwendet.

In einer Ausführung sind drei angetriebene Linearachsen vorgesehen. Bei dieser oder anderen Ausgestaltungen erfolgt eine angetriebene Linearbewegung entlang der in der Getriebestruktur bereitgestellten Linearachsen. Es kann eine serielle Kinematik oder Parallelkinematik in der Getriebestruktur bereitgestellt sein. Der Begriff angetriebene Linearachse in der hier verwendeten Bedeutung bezieht sich auf eine Raumachse, entlang welcher beim haptischen Gerät mittels eines zugeordneten Antriebs eine Linearverlagerung bereitgestellt ist.

Serielle Kinematiken sind aufeinander aufbauende Anordnungen von Gliedern, die durch Gelenke miteinander verbunden sind und durch Aktoren angetrieben werden können. Die Bewegung eines gestellnäheren Gliedes führt zu einer Bewegung gestellfernerer Glieder. Das kann zu dem Nachteil führen, dass jede gestellnähere Achse die Massen und Trägheiten der gestellferneren Glieder und Aktoren als Trägheit und ggf. Gewichtskraft erfährt und dementsprechend an Dynamik einbüßt. Darüber hinaus ist die Bewegung des letzten Gliedes, also meist des Endeffektoranschlusspunktes, eine Überlagerung der Bewegung mehrerer Glieder, wodurch die Steuerung und Regelung deutlich erschwert wird. Eine Bauform bestehend aus angetriebenen rotatorischen Gelenken kann zu nichtlinearen Übersetzungen und somit zur Lageabhängigkeit der übertragbaren Kräfte und Momente führen. Strecklagen führen meist zu einer erheblichen Kraftverminderung. Bei bestimmten Getriebestrukturen kann die Eindeutigkeit der Systemreaktion auf Positionsvorgaben durch den Nutzer verloren gehen. Bei paralleler Kinematik sind meist mehrere Gelenke gestellfest angeordnet. Das Mitführen gestellfernerer Glieder und Aktoren entfällt, wodurch im Allgemeinen die Dynamik gesteigert (Impedanz gesenkt) oder Strukturmassen und Antriebsleistungen verringert werden können. Häufig kann einem Freiheitsgrad (des Endeffektoranschlusspunktes, also des letzten bewegten Gliedes) genau ein Aktor(freiheitsgrad) zugeordnet werden, was die Berechnung der Steuervorgaben vereinfacht. Eine Kombination aus Gliedern, wobei einige parallel und andere seriell angeordnet sind, ergibt eine Hybridkinematik (Hybridgetriebe).

Das haptische Gerät dient ganz allgemein zum Bereitstellen einer auf den Endeffektoranschluss koppelbaren translatorischen Bewegung, um diesen translatorisch zu verlagern, derart, dass dies für einen Nutzer, welcher zum Beispiel den Endeffektoranschluss anfasst, wahrnehmbar oder erfassbar ist. Insoweit stellt das haptische Gerät eine Ausgangsgröße bereit, ohne notwendigerweise eine Eingangsgröße zu haben.

Haptische Geräte bilden die Schnittstelle zwischen Mensch und virtuelle Simulation. Sie können sensomotorisch voll-duplex bidirektional wirken genau wie der haptische Sinn selbst. Die Eingangsgröße eines haptischen Gerätes spiegelt die Ausgangsgröße der Benutzerhand wider. Diese Ein- / Ausgangsgröße kann eine zeitabhängige Funktion sein, die die Veränderung der Position, Geschwindigkeit und der Kraft einer Benutzerhand bzw. des Endeffektors quantifiziert. Es wird vom Mensch-Maschine-Regelkreis oder Mensch-Computer-Regelkreis gesprochen, wenn das haptische Gerät im Zusammenhang mit einer Eingangsgröße eine adäquate Ausgangsgröße ausgibt.

Vorwärts- sowie die Rückwärtskinematik des vorgeschlagenen Systems sind eindeutig bestimmt.

Die für die Konstruktion relevanten Informationen zu anthropometrischen Größen, Kräften, Momenten, Geschwindigkeiten und / oder Frequenzen variieren zum Teil sehr stark. Sie lassen sich in taktile und kinästhetische Anforderungen unterscheiden. Für taktile Reize sind Kräfte im Bereich von 0,005 - 5 N bei Frequenzen von 10 - 10.000 Hz und bei Auslenkungen von 1 µm - 1 mm erforderlich bzw. noch spürbar. Der Wahrnehmungsbereich kinästhetischer Reize hat nach DIN EN ISO 9241-910 bei 20-30 Hz seine Obergrenze. Die Bandbreite körperlicher Bewegungen, die bei der kinästhetischen Eingabe berücksichtigt werden kann, liegt bei 5-10 Hz für Finger, bei 1-2 Hz für unerwartete und bei 2-5 Hz für periodische Armbewegungen. Reflexartige Bewegungen können mit bis zu 10 Hz berücksichtigt werden.

Um den hohen Anforderungen an hochfrequente mechanische Aktionen für die taktile Empfindung gerecht zu werden, kann es erforderlich sein, auf zusätzliche Freiheitsgrade ausweichen, beispielsweise in Form von Vibratoren im Greifbereich. Unter Umständen können nämlich die mechanischen Komponenten, welche die Kinästhetik adressieren, nicht mit höheren Frequenzen bewegt werden.

Drei angetriebene Linearachsen können entlang der Achsen eines orthogonalen Koordinatensystems verlaufen. Hierdurch erstrecken sich die angetriebenen Linearachsen entlang eines orthogonalen Koordinatensystems.

Bei einer Ausgestaltung kann vorgesehen sein, dass die angetriebenen Linearachsen an einer Stützstruktur aufgenommen sind. Die Stützstruktur kann ein oder mehrere Elemente aufweisen, die zumindest zum Teil untereinander verbunden sein können, beispielsweise mittels Schraub- oder Magnetverbindungen.

Ein oder mehrere Elemente der Stützstruktur können sich längs der angetriebenen Linearachsen erstrecken.

Mit der Stützstruktur können ein oder mehrere Führungsachsen gebildet sein.

Eine Ausgestaltung kann vorsehen, dass die angetriebenen Linearachsen jeweils mit einer Schiene und einem hierauf in Längsrichtung der Schiene verlagerbaren Schlitten gebildet sind. Die Schienen können mechanisch bedingt sein, zum Beispiel um die Linearachsen zu entlasten und unerwünschte Rotationen zu sperren.

Die Getriebestruktur kann ein oder mehrere rotatorische Gelenke aufweist. Mit Hilfe eines oder mehrere rotatorischer Gelenke können zusätzliche Bewegungsfreiheitsgrade in der Getriebestruktur bereitgestellt werden. Rotatorische Gelenke (mit Sensoren, mit oder ohne Aktuatoren) können zusätzlich als Erweiterung am Endeffektoranschluss angebaut werden, um bis zu drei rotatorische Freiheitsgrade zusätzlich bereitzustellen. Weitere Freiheitsgrade (rotatorisch oder translatorisch) können vorgesehen sein, um etwa das Greifen abzubilden. Dies sind Anbauten, die unabhängig am haptischen Gerät angebracht werden können.

An das haptische Gerät kann ein haptischer Regler koppeln. Mit Hilfe des haptischen Reglers können ein oder mehrere Eingangsgrößen bereitgestellt werden, die auf das haptische Gerät gegeben werden. Es kann vorgesehen sein, mit dem haptischen Regler Daten betreffend eine haptische Interaktion mit dem Nutzer aufzubereiten und hieraus Steuersignale für das haptische Gerät abzuleiten. Der haptische Regler kann mittels eines oder mehrerer Softwaremodule implementiert sein, die (i) eine Benutzereingabe (über dem Endeffektor) in die Simulation bereitstellen kann, ohne diese numerisch auszuhebeln / einzuschwingen; (ii) Kollisionskräfte aus der Simulation dem Benutzer (über dem Endeffektor) so bereitstellen kann, dass er diese als real empfindet; (iii) mit etwa 1000Hz laufen kann, und / oder (iv) insgesamt den Mensch-Maschine-Regelkreis stabilisieren kann.

Es kann eine Weg- und / oder Geschwindigkeitserfassungseinrichtung vorgesehen sein, die eingerichtet ist, eine räumliche Lage des vom Nutzer bedienten Endeffektors zu bestimmen. Mit Hilfe der Wegerfassungseinrichtung ist eine Sensorik zum Bestimmen der räumlichen Lage des Endeffektoranschlusses aufgrund dessen Betätigung durch den Nutzer bereitgestellt. Diese Informationen können in Form von Wegerfassungsdaten an den haptischen Regler zur Verarbeitung gegeben werden. Dieser kann hiermit Position, Kraft oder Geschwindigkeit am haptischen Gerät regeln. Es kann die Eingabe des Benutzers der Simulation bereitgestellt werden.

Eine Ausführungsform kann vorsehen, dass eine Krafterfassungseinrichtung vorgesehen ist, die eingerichtet ist, am Endeffektoranschluss auftretende Kräfte und / oder Momente zu bestimmen. Zusätzlich oder alternativ zur Sensorik zum Bestimmen der räumlichen Lage des Endeffektoranschlusses ist mittels der Krafterfassungseinrichtung eine Sensorik bereitgestellt, um die vom Benutzer am Endeffektoranschluss aufgebrachten Kräfte zu bestimmen. Informationen über die erfassten Kräfte am Endeffektoranschluss können mittels Daten an den haptischen Regler übertragen werden. Diese Daten können als Kraftmessdaten bezeichnet werden. Das Erzeugen von Steuersignalen im haptischen Regler kann dann unter Auswertung der Kraftmessdaten erfolgen, so dass die mittels der Getriebestruktur erzeugte translatorische Bewegung unter Berücksichtigung der bestimmten Kräfte am Endeffektoranschluss ausgeführt werden kann.

Es kann eine Krafterzeugungseinrichtung vorgesehen sein, die eingerichtet ist, einen mechanischen Widerstand am Endeffektoranschluss zu regeln. Die Krafterzeugung kann mit Hilfe eines oder mehrerer Aktuatoren erfolgen. Es kann die bei der translatorischen Bewegung des Endeffektors bereitgestellte Kraft geregelt werden, also das Ausmaß an auftretenden Kräften, die vom Nutzer am Endeffektoranschluss wahrgenommen werden. Es kann eine Admittanz- oder eine Impedanzregelung vorgesehen sein. Je nachdem wie groß das Gerät ist, muss der Benutzer ungleich große Kraft anwenden, um den Endeffektor zu verschieben. Insbesondere bei großen und schwergängigen Geräten kann eine Admittanzregelung sinnvoll sein.

Eine Ausgestaltung kann vorsehen, dass ein haptischer Simulator vorgesehen ist, der eingerichtet ist, eine Interaktion mit einem virtuellen Objekt zu simulieren. Der Simulator kann funktionell an den haptischen Regler koppeln, wobei eine digitale oder eine analoge Kopplung vorgesehen sein kann. Es kann eine serielle Kette folgender Art gebildet sein: Simulator - haptischer Regler - haptisches Gerät mit Getriebestruktur, Ausleger und Endeffektor. Der haptische Simulator kann mit Hilfe einer Datenverarbeitungseinrichtung gebildet sein. Auf der Datenverarbeitungseinrichtung kann ein Softwaremodul ausgeführt werden, welches ein virtuelles Objekt sowie die Wechselwirkung hiermit simuliert. Vom haptischen Regler können Daten betreffend eine Interaktion auf den haptischen Simulator gegeben werden, welcher auf Basis des simulierten virtuellen Objektes Ausgangsdaten bestimmt, die an den haptischen Regler zurückgegeben werden. Haptische Simulatoren für unterschiedliche virtuelle Objekte sind als solche in verschiedenen Ausgestaltungen bekannt.

Die vorangehend im Zusammenhang mit dem haptischen System beschriebenen Ausgestaltungen können in Verbindung mit dem Verfahren zum Betreiben eines haptischen Systems mit einem haptischen Gerät entsprechend vorgesehen sein.

Das haptische Gerät kann eingerichtet sein, entfernte Roboter anzusteuern, die in Kernreaktoren, auf Minenfeldern, im Weltall oder unter Wasser von Menschenhand angesteuerte Arbeit verrichten.

### Beschreibung von Ausführungsbeispielen

Im Folgenden werden Ausführungsbeispiele unter Bezugnahme auf Figuren einer Zeichnung näher erläutert. Hierbei zeigen:
- Fig. 1: eine schematische Darstellung eines haptischen Gerätes,
- Fig. 2: eine schematische Darstellung eines haptischen Systems, bei dem an ein haptisches Gerät ein haptischer Regler koppelt,
- Fig. 3: eine schematische Darstellung eines haptischen Systems, bei dem an den haptischen Regler ein haptischer Manipulator und / oder ein haptischer Simulator koppeln,
- Fig. 4: eine schematische Darstellung eines haptischen Gerätes mit einer Getriebestruktur mit angetriebenen Linearachsen und einem Endeffektor, auf den eine Ausgangsgröße (translatorische Bewegung) der Getriebestruktur über einen Ausleger gegeben wird,
- Fig. 5: eine schematische Darstellung des haptischen Gerätes aus Fig. 4,
- Fig. 6: eine schematische Darstellung eines haptischen Systems unter Verwendung der Anordnung mit Getriebestruktur, Ausleger und Endeffektoranschluss aus Fig. 4 und
- Fig. 7: eine schematische Darstellung einer weiteren Ausführungsform der Getriebestruktur eines haptischen Gerätes.

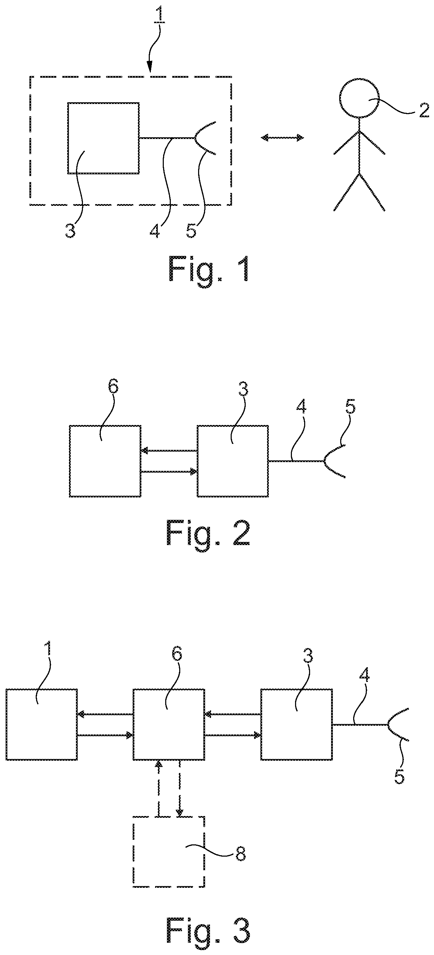

Fig. 1 zeigt eine schematische Darstellung eines haptischen Gerätes 1, welches eingerichtet ist, eine Ausgangsgröße bereitzustellen, die von einem Benutzer 2 wahrnehmbar ist. Bei der gezeigten Ausführungsform ist Ausgangsgröße eine translatorische Bewegung, die von einer Getriebestruktur 3 bereitgestellt und über einen Ausleger 4, welcher aus der Getriebestruktur 3 herausgeführt ist, auf einen Endeffektoranschluss 5 gegeben wird, welcher von dem Nutzer 2 zum Beispiel mit einer Hand angefasst werden kann. Die translatorische Bewegung des Endeffektors 5 kann eine räumliche Bewegung sein.

Fig. 2 zeigt ein haptisches System, bei dem das haptische Gerät 1 mit Getriebestruktur 3, Ausleger 4 und Endeffektoranschluss 5 an einen haptischen Regler 6 koppelt, derart, dass von dem haptischen Regler 6 bereitgestellte Signale beim Erzeugen der Ausgangsgröße (translatorische Bewegung) in dem haptischen Gerät 1 verarbeitet werden.

Bei dem haptischen System in Fig. 3 koppeln an den haptischen Regler 6 ein (Tele-)Manipulator 7 und / oder ein haptischer Simulator 8. Der (Tele-)Manipulator 7 kann mit einer Wegeerfassungseinrichtung und / oder einer Krafterfassungseinrichtung (nicht dargestellt) gebildet sein, mit denen eine jeweilige Sensorik zum Bestimmen einer räumlichen Lage des Endeffektors 5 und zum Bestimmen von Kräften am Endeffektoranschluss 5 bereitgestellt sein kann. Ausgehend von den erfassten Messdaten kann der haptischer Regler 6 unter Berücksichtigung der bestimmten Raumlage und / oder der erfassten Kraftsituation am Endeffektoranschluss 5 Steuersignale für die Getriebestruktur 3 in dem haptischen Gerät 1 erzeugen.

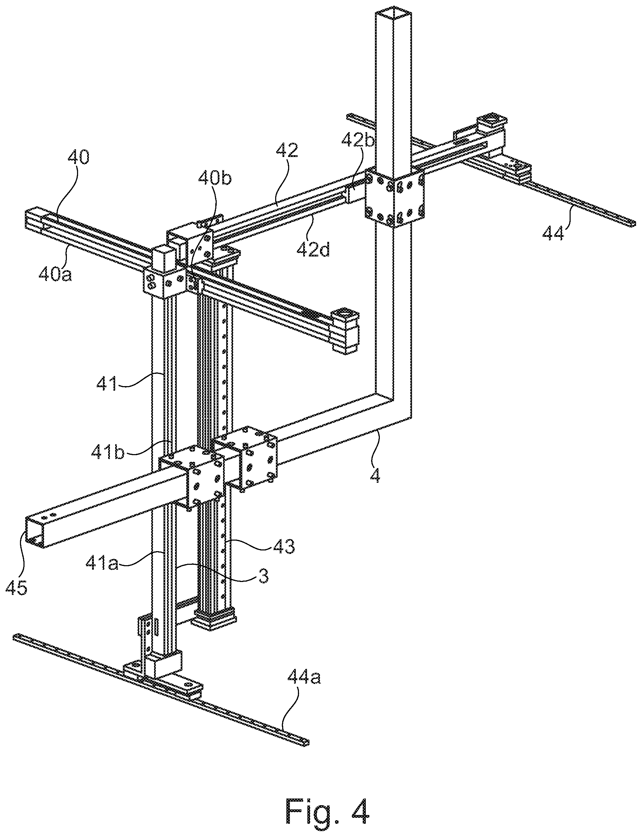

Fig. 4 zeigt eine schematische Darstellung einer Ausführung der Getriebestruktur 3 des haptischen Gerätes 1, bei der angetriebene Linearachsen 40, 41, 42 vorgesehen sind, die jeweils über eine Führungsachse 40a, 41a, 42a sowie einen hierauf verlagerbar angeordneten und angetriebenen Schlitten 40b, 41b, 42b aufweisen. Mit Hilfe der angetriebenen Linearachsen 40, 41, 42 ist in dem gezeigten Ausführungsbeispiel ein orthogonales (z.B. kartesisches) Koordinatensystem aufgespannt. Weiterhin sind stützende Führungsachsen 43, 44, 44a vorgesehen. An die Getriebestruktur 3 koppelt der Ausleger 4, welcher aus der Getriebestruktur 3 herausgeführt ist und eine Koppelstelle 45 für den Endeffektoranschluss 5 aufweist. Auf diese Weise ist eine mit der Getriebestruktur 3 als Ausgangsgröße erzeugte translatorische Bewegung für den Endeffektoranschluss 5 bereitgestellt, so dass dieser für den Benutzer 2 wahrnehmbar translatorisch verlagert werden kann.

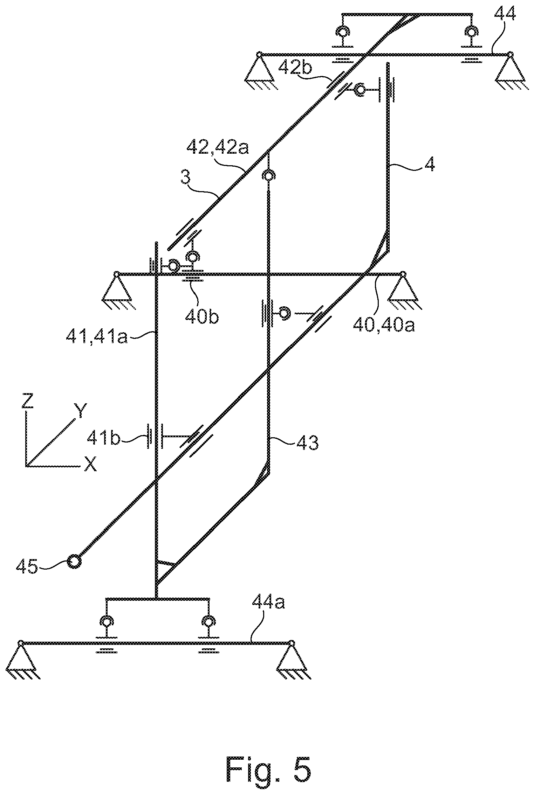

Fig. 5 zeigt eine schematische Darstellung der Getriebestruktur aus Fig. 4.

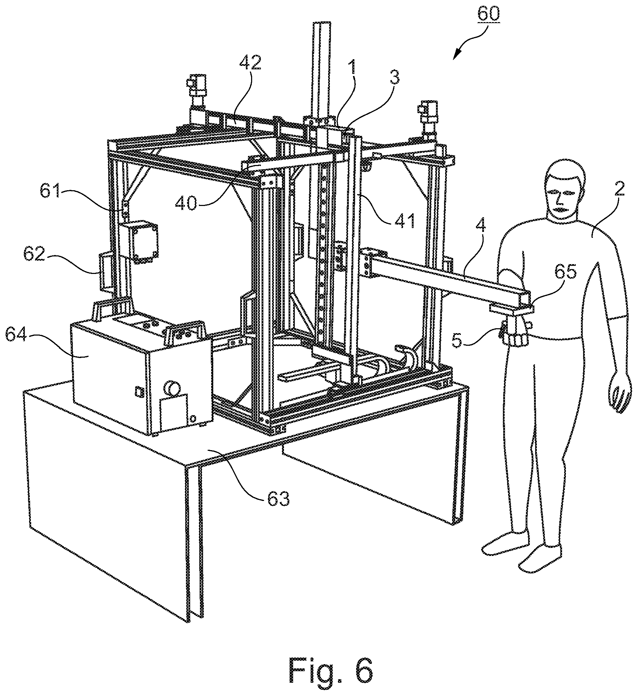

Fig. 6 zeigt eine schematische Darstellung eines haptischen Systems 60 unter Verwendung der Getriebestruktur 3 mit den angetriebenen Linearachsen 40, 41, 42.

Die Getriebestruktur 3 ist in einer Rahmenkonstruktion 61 aufgenommen, an der Tragegriffe 62 vorgesehen sind. Angeordnet ist die Rahmenkonstruktion 61 auf einer Basis 63, auf der auch ein Schaltschrank 64 angeordnet ist, welcher Steuer-, Regel- und / oder Leistungselemente enthält.

Das haptische System 60 verfügt in der gezeigten Ausführung über Stützschienen mit Kugelschienenführung. Am Endeffektoranschluss 5 ist eine Krafterfassungseinrichtung 65 vorgesehen.

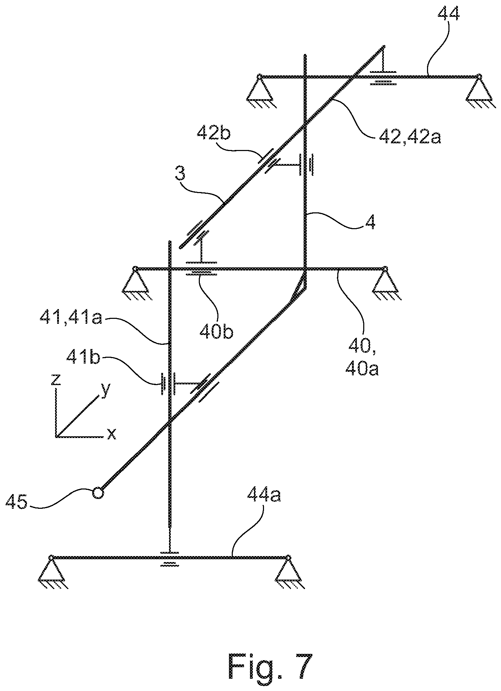

Fig. 7 zeigt eine schematische Darstellung einer vereinfachten Ausführungsform der Getriebestruktur 3 des haptischen Gerätes 1. Gegenüber der in Fig. 4 und 5 dargestellten Ausführungsform weist die Getriebestruktur 3 keine stützende Führungsachse 43 auf. Die anderen Komponenten entsprechen im Wesentlichen den in Fig. 4 und 5 dargestellten Komponenten, sodass hierfür die gleichen Bezugszeichen verwendet werden.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Haptisches System (60), mit einem haptischen Gerät (1), welches einen Endeffektoranschluss (5) und eine Getriebestruktur (3) aufweist, mit der als Ausgangsgröße eine translatorische Bewegung erzeugbar ist, wobei die Getriebestruktur (3) mit angetriebenen Linearachsen (40, 41, 42) gebildet ist, **dadurch gekennzeichnet, dass** die translatorische Bewegung über einen Ausleger (4) in horizontaler Richtung aus der Getriebestruktur (3) heraus an den Endeffektoranschluss (5) geführt ist, um diesen für einen Nutzer (2) wahrnehmbar zu bewegen.

2. Haptisches System nach Anspruch 1, **dadurch gekennzeichnet, dass** drei angetriebene Linearachsen (40, 41, 42) entlang der Achsen eines orthogonalen Koordinatensystems verlaufen.

3. Haptisches System (60) nach Anspruch 1 oder 2, **dadurch gekennzeichnet, dass** die angetriebenen Linearachsen (40, 41, 42) an einer Stützstruktur aufgenommen sind.

4. Haptisches System (60) nach Anspruch 3, **dadurch gekennzeichnet, dass** ein oder mehrere Elemente der Stützstruktur sich längs der angetriebenen Linearachsen (40, 41, 42) erstrecken.

5. Haptisches System (60) nach Anspruch 2 oder 3, dadurch **gekennzeichne**t, dass mit der Stützstruktur ein oder mehrere Führungsachsen (43, 44, 44a) gebildet sind.

6. Haptisches System (60) nach mindestens einem der vorangehenden Ansprüche, **dadurch gekennzeichnet, dass** die angetriebenen Linearachsen (40, 41, 42) jeweils mit einer Schiene (40a, 41a, 42a) und einem hierauf in Längsrichtung der Schiene verlagerbaren Schlitten (40b, 41b, 42b) gebildet sind.

7. Haptisches System (60) nach mindestens einem der vorangehenden Ansprüche, **dadurch gekennzeichnet, dass** die Getriebestruktur (3) ein oder mehrere rotatorische Gelenke aufweist.

8. Haptisches System (60) nach mindestens einem der vorangehenden Ansprüche, **dadurch gekennzeichnet, dass** an das haptische Gerät ein haptischer Regler (6) koppelt.

9. Haptisches System (60) nach mindestens einem der vorangehenden Ansprüche, **dadurch gekennzeichnet, dass** eine Weg- und / oder Geschwindigkeitserfassungseinrichtung vorgesehen ist, die eingerichtet ist, eine räumliche Lage des vom Nutzer (2) bedienten Endeffektoranschlusses (5) zu bestimmen.

10. Haptisches System (60) nach mindestens einem der vorangehenden Ansprüche, **dadurch gekennzeichnet, dass** eine Krafterfassungseinrichtung (65) vorgesehen ist, die eingerichtet ist, am Endeffektoranschluss (5) auftretende Kräfte und / oder Momente zu bestimmen.

11. Haptisches System (60) nach mindestens einem der vorangehenden Ansprüche, **dadurch gekennzeichnet, dass** eine Krafterzeugungseinrichtung vorgesehen ist, die eingerichtet ist, auf den Endeffektoranschluss (5) beim translatorischen Bewegen eingeleitete Kräfte zu regeln.

12. Haptisches System (60) nach mindestens einem der vorangehenden Ansprüche, **dadurch gekennzeichnet, dass** ein haptischer Simulator (8) vorgesehen ist, der eingerichtet ist, eine Interaktion mit einem virtuellen Objekt zu simulieren.

13. Verfahren zum Betreiben eines haptischen Systems (60) mit einem haptischen Gerät (1), welches einen Endeffektoranschluss (5) und eine Getriebestruktur (3) aufweist, wobei das Verfahren die folgenden Schritte aufweist:
- Erzeugen einer translatorischen Bewegung als Ausgangsgröße der Getriebestruktur (3) und
- translatorisches Bewegen des Endeffektoranschlusses (5),
wobei in der Getriebestruktur (3) zum Erzeugen der Ausgangsgröße angetriebene Linearachsen (40, 41, 42) genutzt werden, **dadurch gekennzeichnet, dass** der Endeffektoranschluss (5) translatorisch bewegt wird, indem die Ausgangsgröße über einen Ausleger (4) in horizontaler Richtung aus der Getriebestruktur (3) heraus an den Endeffektoranschluss (5) geführt wird.

## Claims

1. A haptic system (60), comprising a haptic device (1), which comprises an end effector connection (5) and a gear structure (3), using which a translational movement can be generated as outpu value, the gear structure (3) being formed with driven linear shafts (40, 41, 42), **characterized in that** the translational movement is guided via an arm (4) in the horizontal direction out of the gear structure (3) to the end effector connection (5), in order to move the same in a manner discernible for a user (2).

2. The haptic system according to Claim 1, **characterized in that** three driven linear shafts (40, 41, 42) run along the axes of an orthogonal coordinate system.

3. The haptic system (60) according to Claim 1 or 2, **characterized in that** the driven linear shafts (40, 41, 42) are accommodated on a support structure.

4. The haptic system (60) according to Claim 3, **characterized in that** one or more elements of the support structure extend along the driven linear shafts (40, 41, 42).

5. The haptic system (60) according to Claim 2 or 3, **characterized in that** one or more guiding shafts (43, 44, 44a) are formed with the support structure.

6. The haptic system (60) according to at least one of the preceding claims, **characterized in that** the driven linear shafts (40, 41, 42) are each formed with a rail (40a, 41a, 42a) and a slide (40b, 41b, 42b) which is displaceable thereon in the longitudinal direction of the rail.

7. The haptic system (60) according to at least one of the preceding claims, **characterized in that** the gear structure (3) has one or more rotary joints.

8. The haptic system (60) according to at least one of the preceding claims, **characterized in that** a haptic controller (6) couples to the haptic device.

9. The haptic system (60) according to at least one of the preceding claims, **characterized in that** a travel and/or speed sensing device is provided, which is configured to determine a spatial location of the end effector connection (5) operated by the user (2).

10. The haptic system (60) according to at least one of the preceding claims, **characterized in that** a force sensing device (65) is provided, which is configured to determine forces and/or torques arising at the end effector connection (5).

11. The haptic system (60) according to at least one of the preceding claims, **characterized in that** a force generating device is provided, which is configured to control forces introduced at the end effector connection (5) during translational movement.

12. The haptic system (60) according to at least one of the preceding claims, **characterized in that** a haptic simulator (8) is provided, which is configured to simulate an interaction with a virtual object.

13. A method for operating a haptic system (60) comprising a haptic device (1), which comprises an end effector connection (5) and a gear structure (3), the method comprising the following steps:
- generating a translational movement as output value of the gear structure (3), and
- translationally moving the end effector connection (5),
wherein driven linear shafts (40, 41, 42) are used in the gear structure (3) to generate the output value, **characterized in that** the end effector connection (5) is moved translationally by the output value being transmitted by means of an arm (4) in the horizontal direction out of the gear structure (3) to the end effector connection (5).

## Revendications

1. Système haptique (60), pourvu d'un appareil haptique (1), lequel comporte un raccordement (5) pour effecteur terminal et une structure de transmission (3), à l'aide de laquelle en tant que grandeur de sortie, un déplacement en translation est susceptible d'être généré, la structure de transmission (3) étant constituée avec des axes linéaires (40, 41, 42) entraînés, **caractérisé en ce que** le déplacement en translation est guidé par l'intermédiaire d'une flèche (4) en direction horizontale à partir de la structure de transmission (3) sur le raccordement (5) pour effecteur terminal, pour déplacer celui-ci de manière perceptible par un utilisateur (2).

2. Système haptique selon la revendication 1, **caractérisé en ce que** trois axes linéaires (40, 41, 42) entraînés s'écoulent le long des axes d'un système de coordonnées orthogonales.

3. Système haptique (60) selon la revendication 1 ou 2, **caractérisé en ce que** les axes linéaires (40, 41, 42) entraînés sont réceptionnés sur une structure d'appui.

4. Système haptique (60) selon la revendication 3, **caractérisé en ce qu'**un ou plusieurs éléments de la structure d'appui s'étendent le long des axes linéaires (40, 41, 42) entraînés.

5. Système haptique (60) selon la revendication 2 ou 3, **caractérisé en ce que** par la structure d'appui sont constitués un ou plusieurs axes de guidage (43, 44, 44a).

6. Système haptique (60) selon au moins l'une quelconque des revendications précédentes, **caractérisé en ce que** les axes linéaires (40, 41, 42) entraînés sont constitués chacun d'un rail (40a, 41a, 42a) et d'un chariot (40b, 41b, 42b) déplaçable sur ce dernier, dans la direction longitudinale du rail.

7. Système haptique (60) selon au moins l'une quelconque des revendications précédentes, **caractérisé en ce que** la structure de transmission (3) comporte une ou plusieurs articulations en rotation.

8. Système haptique (60) selon au moins l'une quelconque des revendications précédentes, **caractérisé en ce que** sur l'appareil haptique est accouplé un régulateur (6) haptique.

9. Système haptique (60) selon au moins l'une quelconque des revendications précédentes, **caractérisé en ce qu'**il est prévu un dispositif de détection de la course et / ou de détection de la vitesse, qui est aménagé pour déterminer une position dans l'espace du raccordement (5) pour effecteur final desservi par l'utilisateur (2).

10. Système haptique (60) selon au moins l'une quelconque des revendications précédentes, **caractérisé en ce qu'**il est prévu un dispositif de détection de la force (65), qui est aménagé pour déterminer des forces et / ou des couples survenant sur le raccordement (5) pour effecteur terminal.

11. Système haptique (60) selon au moins l'une quelconque des revendications précédentes, **caractérisé en ce qu'**il est prévu un dispositif de génération de forces, qui est aménagé pour réguler des forces introduites sur le raccordement (5) pour effecteur terminal lors du déplacement en translation.

12. Système haptique (60) selon au moins l'une quelconque des revendications précédentes, **caractérisé en ce qu'**il est prévu un simulateur (8) haptique, qui est aménagé pour simuler une interaction avec un objet virtuel.

13. Procédé opérationnel d'un système haptique (60) pourvu d'un appareil haptique (1), lequel comporte un raccordement (5) pour effecteur terminal et une structure de transmission (3), le procédé comportant les étapes suivantes consistant à :
- générer un déplacement en translation en tant que grandeur de sortie de la structure de transmission (3) et
- déplacer en translation le raccordement (5) pour effecteur terminal,
dans la structure de transmission (3), pour générer la grandeur de sortie étant utilisés des axes linéaires (40, 41, 42) entraînés, **caractérisé en ce que** l'on déplace en translation le raccordement (5) pour effecteur terminal **en ce que** la grandeur de sortie est guidée par l'intermédiaire d'une flèche (4) dans la direction horizontale hors de la structure de transmission (3) sur le raccordement (5) pour effecteur terminal.
